# EUROPÄISCHE PATENTSCHRIFT

(11) **EP 0 502 294 B1**
(45) Veröffentlichungstag und Bekanntmachung des Hinweises auf die Patenterteilung: **18.05.1994**
(21) Anmeldenummer: 92100909.8
(22) Anmeldetag: 21.01.1992
(51) Int. Cl.: B60P 7/08

(54) **Ladebrücke eines LKWs mit Zurrabstützungen**
Fixing means for lashing straps for the loading ramp of a lorry
Oeillet de fixation pour une sangle d'amarrage pour la rampe de chargement d'un camion

(30) Priorität: 07.03.1991 DE 4107304
(43) Veröffentlichungstag der Anmeldung: 09.09.1992
(73) Patentinhaber: MAN Nutzfahrzeuge Aktiengesellschaft, 80976 München (DE)
(72) Erfinder: Kloss, Hans-Joachim, Dipl.-Ing. (FH), W-8060 Dachau (DE)

(56) Entgegenhaltungen:
- DE-A- 3 935 267
- GB-A- 2 167 354
- US-A- 3 412 693
- US-A- 3 804 436

## Beschreibung

Die Erfindung bezieht sich auf einen Lkw mit einer Ladebrücke und daran angebrachten Zurrabstützungen.

Es handelt sich um eine besonders vorteilhafte Weiterbildung der Einrichtung nach DE-A-3 935 267.

In einer Ausführungsvariante zur Hauptanmeldung ist das Ösenelement nicht drehbar auf einer Drehachse gelagert, vielmehr ist es lose und nach allen Richtungen frei bewegbar, ein Langloch aufweisend, an einer Stützachse aufgehängt. Solcherart übt es, sich immer auf die Zurrichtung des Seiles einstellend, keine Biegekräfte auf den es haltenden Bolzen aus. Des weiteren kann es sich in Folge seiner vielen Freiheitsgrade in die äußerste Randstellung der Mulde angedrückt werden und somit den Aufladebereich für Transportgut maximieren. Auch kann es, wenn Fördergut aufgeladen ist, noch aus der äußersten Ecke herausgezogen werden. Dieser Vorteil wird noch durch die Schräganordnung der Mulde an ihrem äußersten Rand ausgebaut.

Die Erfindung ist in einem Ausführungsbeispiel dargestellt.

Es zeigen:

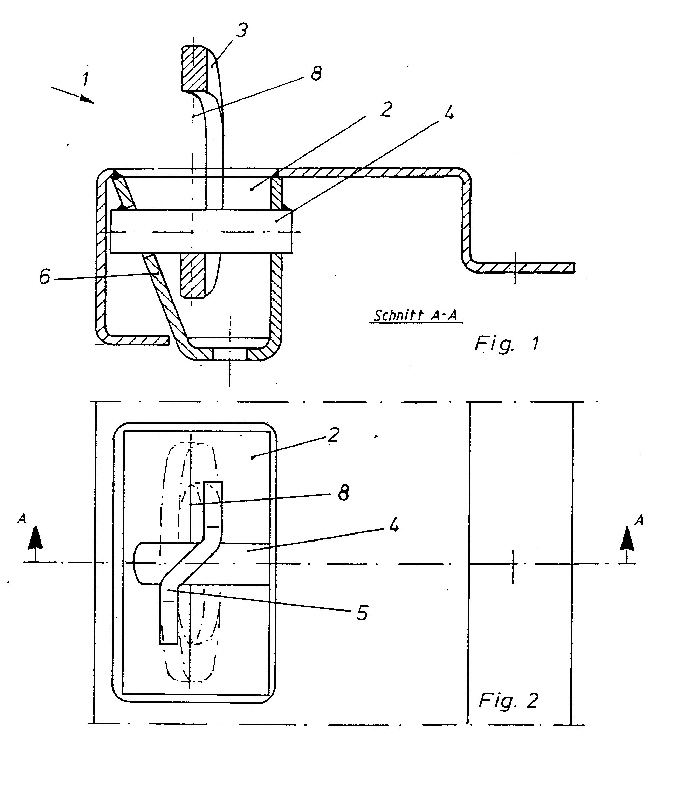

Fig. 1 einen Schnitt in der Vertikalen nach Fig. 2,
Fig. 2 eine Draufsicht der Zurrabstützung.

Die Zurrabstützung 1 besteht aus einer in der Ladebrücke eingelassenen Mulde 2, in der eine Stützachse 4 fest eingelassen ist. Die Stützachse 4 wird von einem länglichen Ösenelement 3 mittels eines Langlochs 8 umgriffen, so daß das Ösenelement sich über mehrere Freiheitsgrade optimal in der Mulde 2 anlagern kann. Das Ösenelement weist in Längsrichtung des Langloches eine Kröpfung 5 auf, so daß sich ein Flachkarabiner problemlos und ohne zusätzlichen Raumaufwand in das Langloch 8 einhängen kann. Die Mulde 2 weist an ihrer äußeren Begrenzung eine Schräge 6 auf, die es gestattet, daß das Ösenelement 3 sich dort in der äußersten Position anlagert.

### Bezugszeichenliste

1 Zurrabstützung
2 Mulde zu 1
3 Ösenelement
4 Stützachse
5 Kröpfung
6 Schräge
7 ---------
8 Langloch

## Patentansprüche

1. Lkw mit einer Ladebrücke und daran angebrachten Zurrabstützungen, an denen Ösenelemente zum Einhängen von Zurrmitteln angeordnet sind, dadurch gekennzeichnet, daß das um die Materialstärke eines einzuhängenden Flachkarabiners gekröpfte Ösenelement (3) entlang der Längsachse des Kröpfbereiches ein Langloch (8)aufweist, das eine in einer Mulde (2) derZurrabstützung (1) befestigte Stützachse (4) umgreift.

2. Lkw mit einer Ladebrücke nach Anspruch 1, dadurch gekennzeichnet, daß die Mulde (2) eine zur Außenkante der Ladebrücke gewandte Schräge (6) aufweist.

## Claims

1. Truck with platform body and attached lashing supports to which loop elements are fastened for hooking up lashing elements, characterised in that the loop element (3) offset by the thickness of a flat carbine to be hooked in has a slot (8) along the longitudinal axis of the offset area, which slot grips a support bar (4) mounted in a cavity (2) of the lashing support (1).

2. Truck with platform body as under the Claim 1, characterised in that the cavity (2) has a slope (6) facing the outer edge of the platform body.

## Revendications

1. Camion à surface de chargement munie de supports d'amarrage équipés d'oeillets pour l'accrochage de moyens d'amarrage, caractérisé en ce que l'oeillet (3) cintré de l'épaisseur du mousqueton plat qu'il reçoit présente suivant l'axe longitudinal de la partie cintrée, un trou oblong (8) qui entoure un axe d'appui (4) fixé dans une goulotte (2) du support d'amarrage (1).

2. Camion à surface de chargement selon la revendication 1, caractérisé en ce que la goulotte (2) comporte une rampe (6) tournée vers l'arête extérieure de la surface de chargement.
